# EUROPÄISCHE PATENTSCHRIFT

(11) **EP 2 350 248 B1**
(45) Veröffentlichungstag und Bekanntmachung des Hinweises auf die Patenterteilung: **22.03.2017**
(21) Anmeldenummer: 09744066.3
(22) Anmeldetag: 19.10.2009
(51) Int. Cl.: C11D 3/20, C07C 51/235, C08B 31/18

(54) **SOLUBILISIERUNGSMITTEL FÜR METALLIONEN**
SOLUBILIZER FOR METAL IONS
AGENT DE SOLUBILISATION POUR IONS DE MÉTAL

(30) Priorität: 20.10.2008 DE 102008053607
(43) Veröffentlichungstag der Anmeldung: 03.08.2011
(73) Patentinhaber: Südzucker Aktiengesellschaft Mannheim/Ochsenfurt, 68165 Mannheim (DE)
(72) Erfinder: HAJI BEGLI, Alireza, 67305 Ramsen (DE); KUNZ, Markwart, 38106 Braunschweig (DE); KRÖNER, Christine, 67283 Obrigheim/Pfalz (DE); MOSER, Matthias, 22359 Hamburg (DE); LEVECKE, Bart, 2860 Sint-Katelijne-Waver (BE)
(74) Vertreter: Schwahn, Hartmut
(86) Internationale Anmeldenummer: PCT/EP2009/007475
(87) Internationale Veröffentlichungsnummer: WO 2010/046070

(56) Entgegenhaltungen:
- EP-A1- 0 472 042
- EP-A2- 0 232 202
- FR-A1- 2 722 200
- GB-A- 1 299 646
- SANTACESARIA E ET AL: "Oxidized glucosidic oligomers: a new class of sequestering agents - preparation and properties" CARBOHYDRATE POLYMERS, APPLIED SCIENCE PUBLISHERS, LTD. BARKING, GB, Bd. 23, Nr. 1, 1. Januar 1994 (1994-01-01) , Seiten 35-46, XP024147216 ISSN: 0144-8617 [gefunden am 1994-01-01] in der Anmeldung erwähnt

## Beschreibung

Die Erfindung betrifft Solubilisierungsmittel für Metallionen und schwerlösliche Metallverbindungen, enthaltend als solubilisierendes Agens ein Oxidationsprodukt von Stärkehydrolysat, Verfahren zum Solubilisieren von Metallionen und die Verwendung dieses Solubilisierungsmittels.

### Stand der Technik

Metallsalze können aufgrund der Neigung zur Bildung von schwerlöslichen Niederschlägen Störungen in vielen chemischen und technischen Gebieten und bei den verschiedensten chemischtechnischen Prozessen verursachen. Technisch relevante schwerlösliche Metallverbindungen sind vor allem die Oxide, Hydroxide, Phosphate, Carbonate, Oxalate, Silikate und ähnliche Verbindungen insbesondere der Erdalkalimetalle und der Metalle der 1. bis 8. Nebengruppe und der 3. Hauptgruppe des Periodensystems der Elemente. Die Solubilisierung von Metallionen, insbesondere von schwer löslichen Metallverbindungen, zum Beispiel Kalziumcarbonat, die schwerlösliche Beläge bilden, ist entscheidend für die Funktionserhaltung technischer Prozesse und Anlagen. Insbesondere in Prozessen, in denen mit wässrigen Lösungen gearbeitet wird, ist das Verhindern des Ausfallens störender Metallverbindungen relevant. Dafür werden bekanntermaßen komplexierende Agenzien oder Komplexierungsmittel, auch Komplexbildner genannt, welche die Metallionen "abschirmen" und die Metallverbindung in Lösungen halten, verwendet. Typische derartige Mittel sind zum Beispiel EDTA (Ethylendiamintetraacetat), Nitrilotriessigsäure (NTA), Citronensäure oder Gluconsäure.

Die EP 0472 042 A1 beschreibt oxidierte glucosidische Oligomere, die zur Sequestration von Kalzium verwendet werden können. Santacesaria et al., Carbohydrate Polymers 23 (1994), Seiten 35 bis 46 zeigen, dass es sich durch die Art ihrer Herstellung bei diesen Oligomeren um solche handelt, bei denen die Hydroxylgruppen am C2- und C3-Atom oxidiert sind. Die dispergierende Wirkung von oxidierten Kohlenhydraten wird allgemein mit den Carboxylfunktionen an den C2- und C3-Atomen in Zusammenhang gebracht. Bekannte Komplexierungsmittel auf der Basis von Kohlenhydratoligomeren weisen deshalb zumindest an den C2- und C3-Atomen Carboxylfunktionen auf.

Bekannte Komplexierungsmittel auf der Basis von oxidierten Kohlenhydraten, beispielsweise Na-Gluconat, kristallisieren aus hoher konzentrierter wässriger Lösung (mehr als z.B. 40 % TS (Trockensubstanz)) leicht aus. In niedrig konzentrierter Lösung tritt bei Lagerung nachteiligerweise schnell Verderb auf. Außerdem ist ein hoher Wasserteil im Produkt generell unerwünscht. Zur Lagerung und zum Transport müssen diese Produkte nachteiligerweise in kristalline Form überführt werden. Dies erschwert die Verwendung und Weiterverarbeitung. Auf der anderen Seite müssen, um höher konzentrierte lagerstabil Lösungen/Sirupe zu erhalten, zusätzliche kostenintensive Prozesse, beispielsweise Ionenaustausch oder Elektrodialyse, eingesetzt werden.

Die EP 0 232 202 A2 beschreibt Produkte der selektiven Oxidation von Oligosacchariden mit einem Anteil an Verbindungen mit Polymerisationsgrad DP2 bis DP4. Die GB 1 299 646 A beschreibt die Oxidation von Stärkehydrolysaten.

### Aufgabenstellung

Der Erfindung liegt das technische Problem zugrunde, verbesserte Solubilisierungsmittel bereitzustellen, welche die aus dem Stand der Technik bekannten Nachteile überwindet.

Der Erfindung liegt weiter das technische Problem zugrunde, Solubilisierungsmittel bereitzustellen, die unmittelbar, bevorzugt ohne Zwischenbehandlung oder Aufbereitung, in der Produktion als hochkonzentrierte Sirupe herstellbar sind, wobei die Sirupe, beispielsweise mit 40 % TS oder mehr, besonders etwa 60 bis 80 % TS, gut lagerfähig sind und nicht verderben. Die Sirupe sollen außerdem auch bei niedrigen Temperaturen keine Neigung zur Kristallisation zeigen, so dass Lagerung und Transport des Produkts vereinfacht ist.

Der Erfindung liegt weiter das technische Problem zugrunde, Solubilisierungsmittel bereitzustellen, die bei einem sehr hohen pH-Wert, vor allem bei einem pH-Wert von etwa 13 oder mehr, eine gute Metallionenverbindung, das heißt ein gutes Lösungsvermögen beziehungsweise Bindungsvermögen für schwerlösliche Metallionen beziehungsweise Metallverbindungen, besonders für Erdalkalimetalle wie Kalzium und Magnesium, zeigen.

Der Erfindung liegt weiter das technische Problem zugrunde, Solubilisierungsmittel bereitzustellen, die auch bei einem basischen pH-Wert, beispielsweise bei einem pH-Wert von mindestens 8, eine gute Metallionenbindung, besonders für Eisen und gegebenenfalls andere Metallionen der 8. Nebengruppe und der 1. bis 7. Nebengruppe, zeigen.

Der Erfindung liegt weiter das technische Problem zugrunde, hochwirksame Solubilisierungsmittel bereitzustellen, die in weniger als äquimolaren Mengen, bezogen auf die zu solubilisierenden schwerlöslichen Metallionen beziehungsweise Metallverbindungen, beispielsweise in einem molaren Verhältnis von 1 Mol Solubilisierungsmittel zu 2 Mol oder mehr der Metallverbindung, verwendet werden können und die gewünschte Wirkung zeigen.

Der Erfindung liegt das technische Problem zugrunde, Solubilisierungsmittel bereitzustellen, die eine verbesserte Dispergierungskapazität für schwerlösliche Metallionen beziehungsweise Metallverbindungen, beispielsweise für Kalzium und Kalziumverbindungen, haben.

Der Erfindung liegt weiter das technische Problem zugrunde, Solubilisierungsmittel bereitzustellen, die biologisch, das heißt vor allem durch mikrobielle Enzyme, leicht abbaubar und vor allem dem natürlichen Stoffkreislauf wieder zuführbar sind.

Die Erfindung löst das ihr zugrundeliegende technische Problem primär durch die Bereitstellung eines Solubilisierungsmittels für Metallionen und schwerlösliche Metallverbindungen, enthaltend als das solubilisierende Agens ein Oxidationsprodukt oder Oxidationsproduktgemisch, welches herstellbar ist durch C1-selektive Oxidation eines Stärkehydrolysats, wobei das Stärkehydrolysat einen Anteil von mindestens 50 Gew.-% Verbindungen mit DP2 bis DP4 aufweist.

Die Erfindung betrifft also das nachststehend näher charakterisierte Oxidationsprodukt oder Oxidationsproduktgemisch, insbesondere wenn es zur Solubilisierung von Metallionen oder schwerlöslichen Metallverbindungen eingesetzt oder verwendet wird. Das erfindungsgemäße solubilisierende Agens oder Mittel zur Solubilisierung zeichnet sich vor allem dadurch aus, dass es sich um oxidierte monomere und oligomere Kohlenhydrate, insbesondere um Aldonsäuren, oder um Gemische solcher Verbindungen handelt, worin selektiv und bevorzugt ausschließlich, die Aldehydgruppen (Halbacetal) am C1-Atom des Monomers oder Oligomers oxidiert sind. Das solubilisierende Agens oder Mittel gemäß der Erfindung ist also nicht mehrfach, sondern im Wesentlichen nur einfach, bevorzugt ausschließlich einfach, oxidiert. Die Erfindung schließt deshalb in bevorzugter Ausführungsform monomere und oligomere Kohlenhydrate aus, worin die C2- und C3-Atome zu Carboxylfunktionen oxidiert sind. In einer bevorzugten Variante wird erfindungsgemäß ein spezielles katalytisches Oxidationsverfahren zur Oxidation der Kohlenhydrate, insbesondere also Bestandteile des Stärkehydrolysats oder dessen Abwandlungen, davon eingesetzt, das ausschließlich die Bildung von einer von C1-ständigen Carboxylgruppe pro Molekül erlaubt; C2- und C3-ständige Hydroxylgruppen beziehungsweise die jeweiligen C2- und C3-Positionen in der Kette von Oigomeren bleiben im Kohlenhydratmolekül erhalten.

Ohne an die Theorie gebunden sein zu wollen, unterstützen die im erfindungsgemäß oxidierten Kohlenhydratmolekül enthaltenen übrigen nicht-oxidierten Hydroxylgruppen die Kationen-bindende und - solubilisierende Wirkung der C1-ständigen einzigen Carboxylgruppe. Dies gilt vor allem bei Di- und Oligosacchariden. Dieser additive Effekt wurde in Abkehr von der bisherigen Vorstellung, dass ausschließlich die Gegenwart mehrerer Carboxylgruppen in solchen Saccharidmolekülen eine Bindung von Metallionen in Form eines Komplexes ermöglicht, gefunden und ist Bestandteil des für das erfindungsgemäße Solubilisierungsmittel geltend gemachten technischen Vorteils.

Das erfindungsgemäße Agens oder Mittel zur Lösungsvermittlung von Metallionen ist ein in diesem Zusammenhang der erfindungsgemäßen Solubilisierung bisher unbekanntes Produkt.

Das erfindungsgemäße als solubilisierendes Agens eingesetzte Oxidationsprodukt oder Oxidationsproduktgemisch ist überraschenderweise auch in Form eines hoch konzentrierten Sirups, vor allem mit 60 bis 80 % TS, typischerweise 70 % TS, herstellbar, lagerfähig, transportfähig und verarbeitbar, weil keine nachteilige Neigung zur Kristallisation des Produkts auftritt.

Die Erfindung sieht vor, das erfindungsgemäße solubilisierende Agens oder Solubilisierungsmittel vor allem zum Lösen von Belägen schwerlöslicher Metallverbindungen oder zur Verhinderung der Bildung solcher Beläge zu verwenden. Eine bevorzugtes Anwendungsgebiet dieses Mittels sind Reinigerzusammensetzungen, worin das erfindungsgemäße solubilisierende Agens oder Mittel zusammen mit mindestens einer oberflächenaktiven Substanz, ggf. zusammen mit einem Alkalisierungsmittel, beispielsweise Natriumhydroxid, und ggf. weiteren Hilfsstoffen eingesetzt wird. In solchen Zusammensetzungen kommt es bevorzugt zu synergistischen Effekten durch das Zusammenwirken, insbesondere mit den oberflächenaktiven Substanzen und der Alkalität. Die Erfindung ist jedoch nicht auf derartige Anwendungen des erfindungsgemäßen Mittels beschränkt; weitere konkrete Anwendungen und Verwendungen werden nachfolgend beschrieben.

### Detaillierte Beschreibung der Erfindung

Es zeigte sich überraschend, dass ein vornehmlich ausschließlich am C1-Atom oxidiertes Kohlenhydrat oder eine Kohlenhydratzusammensetzung als verbessertes solubilisierendes Agens geeignet ist, das heißt ein besseres Solubilisierungsmittel wird. Darüber hinaus zeigte sich überraschend, dass das erfindungsgemäße Solubilisierungsmittel sich insbesondere in wässrigen Lösungen mit einem hohen, beziehungsweise sehr hohen pH-Wert, also stark alkalische, insbesondere wässrige Lösungen, sehr gut eignet, um Metallionen und schwerlösliche Metallverbindungen, vor allem von Erdalkalimetallen, in Lösung zu halten. Unter einem hohen pH-Wert wird ein Wertebereich von pH 11 und größer, unter einem sehr hohen pH-Wert der Bereich von 13 und größer verstanden. Im Falle von Metallen wie Eisen und anderen Nebengruppenmetallen der 8. Nebengruppe und auch der 1. bis 7. Nebengruppe sieht die Erfindung bevorzugt auch die Verwendung bei pH-Werten im Bereich von pH 8 bis 10, besonders etwa von pH 8 bis 9, vor, weil dort eine besonders starke Solubilisierungswirkung gefunden werden konnte.

Die Erfinder fanden außerdem überraschend, dass die Eigenschaft, Metallionen und schwerlösliche Metallverbindungen in Lösung zu halten beziehungsweise in Lösung zu bringen, also bereits bestehende Niederschläge oder Beläge wieder aufzulösen, bei dem erfindungsgemäßen Agens besonders stark ausgeprägt ist. Dies vor allem im Vergleich zu anderen Mitteln vergleichbarer Stoffgruppen, das heißt oxidierte Kohlenhydrate, besonders Gluconsäure oder Gluconat und Lactobionsäure oder Lactobionat. Das erfindungsgemäße Agens ist überraschenderweise auch viel effektiver als Polycarboxylverbindungen, beispielsweise mehrfach oxidierte Oligosaccharide.

Das erfindungsgemäße Mittel hat besonders die Eigenschaft, nicht nur, wie bekannte oxidierte Kohlenhydrate, als Komplexierungsmittel, sondern allgemein als sogenanntes Solubilisierungsmittel zu wirken. Dies schließt, ohne an die Theorie gebunden sein zu wollen, die Funktion als Sequestrierungsmittel und als Dispergierungsmittel sowie verwandte oder daraus abgeleitete Wirkungen mit ein. Je nach Anwendungsgebiet, Konzentrationsverhältnis und sonstigen Bedingungen wird die eine oder andere Wirkung und Funktionsweise des erfindungsgemäßen Mittels überwiegen.

Es zeigte sich überraschend, dass zum effektiven Solubilisieren der Metallionen oder Metallverbindungen nur wenig des erfindungsgemäßen Solubilisierungsmittels verwendet zu werden braucht, insbesondere weniger als äquimolare Mengen bezogen auf die Metallionen. Das erfindungsgemäße solubilisierende Agens braucht erfindungsgemäß in (gegenüber der Menge der zu lösenden oder in Lösung zu haltenden Metallionen) sehr geringen Mengen eingesetzt werden, um die Metallionen und schwerlösliche Metallverbindungen zu solubilisieren. Beispielsweise können mit 1 Mol des erfindungsgemäßen solubilisierenden Agens mindestens 2 Mol und mehr und besonders 3 Mol oder mehr eines Metallions, beispielsweise Kalziumionen oder einer schwerlöslichen Metallverbindung, beispielsweise Kalziumcarbonat, solubilisiert, das heißt in Lösung gehalten oder gebracht oder gebracht werden. In einer bevorzugten Variante wird das Solubilisierungsmittel deshalb in einem molaren Verhältnis von 1:2 oder mehr, bevorzugt 1:3 oder mehr (Solubilisierungsmittel zu Metallverbindung) verwendet.

Ohne an die Theorie gebunden sein zu wollen, kann das erfindungsgemäße solubilisierende Agens also als Sequestrierungsmittel, ausschließlich und/oder zusätzlich als Dispergierungsmittel und/oder als Komplexierungsmittel wirken.

Das solubilisierende Agens ist durch seine Wirkung gekennzeichnet, dass es, insbesondere in wässrigen Lösungen, Metallionen, die insbesondere in Form schwerlöslicher Metallverbindungen vorliegen, in Lösung hält und somit deren Ausfallen verhindert oder hemmt. Unter "Solubilisierung" wird im Zusammenhang mit dieser Erfindung sowohl das in Lösung Halten als auch das in Lösung Bringen von schwerlöslichen Metallverbindungen und insbesondere von Metallsalzen verstanden. Dabei ist der chemische Wirkungsmechanismus, also die Art und Weise wie das solubilisierende Agens die Ionen in Lösung hält oder bringt, erfindungsgemäß nicht zwingend auf einen einzigen in der Theorie bekannten Mechanismus beschränkt.

Erfindungsgemäß bevorzugt wirkt das solubilisierende Agens, bevorzugt ausschließlich, als Sequestrierungsmittel. Im Zusammenhang mit dieser Erfindung wird unter einem "Sequestrierungsmittel" eine Substanz oder Verbindung verstanden, die die Eigenschaften, insbesondere die Löslichkeit, eines Ions durch Wechselwirkung mit diesem verändert.

Erfindungsgemäß bevorzugt wirkt das solubilisierende Agens, bevorzugt ausschließlich, als Dispergierungsmittel. Charakteristisch für ein "Dispergierungsmittel" im Sinne der Erfindung ist, dass es in weit geringeren als äquimolaren Mengen, bezogen auf das Metallion, dessen Ausfällung verhindert werden soll, eingesetzt werden kann. Erfindungsgemäß ist bevorzugt vorgesehen, dass mit 1 Mol des erfindungsgemäßen solubilisierenden Agens mindestens 2 Mol oder mehr, bevorzugt 3 Mol oder mehr, gegebenenfalls 4 Mol oder mehr, von Metallionen beziehungsweise Metallverbindungen solubilisiert werden. Das Verhältnis von Metallverbindung zum erfindungsgemäßen Agens/Solubilisierungsmittel beträgt bevorzugt stets mehr als 1:1, besonders 2:1 oder mehr und mehr bevorzugt 3:1 oder mehr.

Ohne an die Theorie gebunden sein zu wollen, werden Komplexierungsmittel, auch Komplexbildner genannt, in mindestens äquimolaren Mengen, bezogen auf das Metallion, dessen Ausfällung verhindert werden soll, eingesetzt. In einer alternativen Ausführungsform der Erfindung wirkt das erfindungsgemäße solubilisierende Agens zusätzlich als, und in einer bevorzugten anderen Variante der Erfindung überwiegend und bevorzugt ausschließlich als Komplexierungsmittel. Das Verhältnis von Metallverbindung zum erfindungsgemäßen Agens/Solubilisierungsmittel beträgt hierbei bevorzugt etwa 1:1, um alle in der Lösung befindlichen Metallionen zu komplexieren.

Bevorzugt wird das erfindungsgemäße solubilisierende Agens aus Stärkehydrolysat gewonnen. Stärkehydrolysate, beispielsweise Glucosesirupe, werden in an sich bekannter Weise gewonnen. Besonders bevorzugt ist das Stärkehydrolysat ausgewählt aus so genannten technischen Glucosesirupen oder Maissirupen oder so genannte Maltodextrinen. Allgemein werden im Zusammenhang dieser Erfindung unter "Stärkehydrolysate" auch Mischungen von oder Zusammensetzung mit Glucose, Maltose und oligomeren Glucoseverbindungen verstanden.

Es weist das einsetzbare Stärkehydrolysat einen Anteil von 50 Gew.-% oder mehr, besonders bevorzugt 85 Gew.-% oder mehr di- oder oligomere Verbindungen mit einem Polymerisationsgrad (DP) von DP2 bis DP4 auf. Besonders bevorzugt weist das Stärkehydrolysat einen Anteil von 75 Gew.-% oder mehr, oder 85 Gew.-% oder mehr von Verbindungen mit DP2 bis DP4, bevorzugt von Verbindungen mit DP2, auf. Bevorzugt weist das Stärkehydrolysat einen Anteil von bis zu 90 Gew.-% Verbindungen mit DP2 auf, bevorzugt von bis zu 95 Gew.-%. Bevorzugt weist das Stärkehydrolysat einen Anteil von 5 bis 90 Gew.-%, alternativ von 10 bis 85 Gew.-%, DP2-Verbindungen auf. Der Rest im Stärkehydrolysat sind demgemäß DP1, das heißt vor allem Glucose, und gegebenenfalls weitere Verbindungen mit DP3 beziehungsweise DP4 und höher.

In einer Variante der Erfindung weist das Stärkehydrolysat DP2- und DP3-Verbindungen in einem Anteil von 85 Gew.-% oder weniger auf.

Erfindungsgemäß bevorzugt besitzt das, insbesondere in Form eines technischen Glucosesirups vorliegende Stärkehydrolysat ein Dextrose-Äquivalent (DE) von mindestens DE 40, bevorzugt ist der Bereich von DE 50 bis DE 60, besonders bevorzugt der Bereich von DE 50 bis DE 55. In einer alternativen Variante des Stärkehydrolysats beträgt das DE 90 oder mehr.

Die Erfindung sieht zur Gewinnung des erfindungsgemäßen Agens oder Mittels aus dem vorstehend näher definierten Stärkehydrolysat, dessen unmittelbare Oxidation, und zwar eine bevorzugt katalytische C1-selektive Oxidation vor. Erfindungsgemäß ist vorgesehen, dass dabei die Moleküle des Stärkehydrolysats oder eine Stärkehydrolysat-Zusammensetzung ausschließlich am jeweiligen ersten anomeren C-Atom des Moleküls, das heißt am C1-ständigen Atom, welches die primäre endständige Hydroxylgruppe oder die Aldehydgruppe trägt, zu einer Säuregruppe/Carboxylgruppe oxidiert wird.

Dabei wird als Oxidationsprodukt erfindungsgemäß eine Produktzusammensetzung oder Produktgemisch aus C1-oxidierten monocarboxylierten Kohlehydraten erhalten. Die Erfindung betrifft also bevorzugt Aldonsäure-Zusammensetzungen. Erfindungsgemäß weist das Oxidationsprodukt, bevorzugt mehr als 80 Gew.-%, besonders mehr als 90 Gew.-% und besonders mehr als 95 Gew.-% monocarboxylierte Einfach- oder Mehrfachzucker und/oder Aldonsäuren auf.

In einer anderen Variante wird im Wesentlichen eine Reinsubstanz gegebenenfalls mit Verunreinigungen erhalten.

Verfahren zur Herstellung eines solchen erfindungsgemäßen Agens sind beispielsweise aus der DE 103 19 917 A1 und der DE 10 2005 036 890 A1 bekannt, deren Inhalt vollständig in die Anmeldung integriert wird.

Zur Herstellung eines erfindungsgemäßen Agens kann beispielsweise ein Verfahren eingesetzt werden, wobei das Stärkehydrolysat, insbesondere in wässriger Lösung, in Gegenwart eines Gold-Katalysators, umfassend nanodispers verteilte Gold-Partikel auf einem Träger, insbesondere einem Kohlenstoff-Träger oder einem Metalloxid-Träger, und von Sauerstoff umgesetzt wird. So kann insbesondere eine Aldehyd-Gruppe des Stärkehydrolysats selektiv zu einer Carboxyl-Gruppe oxidiert werden. Der Metalloxid-Träger des Gold-Katalysators kann zum Beispiel ein TiO₂-Träger oder ein Al₂O₃-Träger sein. Der geträgerte Gold-Katalysator kann beispielsweise etwa 0,1 % bis 5 % Gold, vorzugsweise etwa 0,5 % bis 1 % Gold enthalten. Die Oxidation kann bei einem pH-Wert von 7 bis 11 und bei einer Temperatur von 20°C bis 140°C, vorzugsweise 40°C bis 90°C durchgeführt werden. Die Oxidation kann beispielsweise bei einem Druck von 1 bar bis 25 bar durchgeführt werden. Bei dem Verfahren kann beispielsweise während der Oxidation Sauerstoff und/oder Luft durch das Stärkehydrolysat hindurchgeperlt werden. Bei dem Verfahren kann das Verhältnis zwischen der Menge des Stärkehydrolysats und der Menge des auf dem Metalloxid-Träger enthaltenen Goldes beispielsweise größer als 1000 sein.

Ein solcher Katalysator zur selektiven Oxidation des Stärkehydrolysats kann beispielsweise, ohne dass dieses Herstellverfahren, beschränkend zu verstehen wäre, durch ein Inkontaktbringen eines Trägers mit wässriger Lösung einer sauren Chlorogoldsäure-Precursorlösung im "incipient wetness" Verfahren hergestellt werden. Ein so imprägnierter Katalysatorvorläufer wird dann, insbesondere bei Temperaturen von größer oder gleich Raumtemperatur, bevorzugt von 60 °C bis 200 °C, besonders bevorzugt von 60 °C bis 100 °C, getrocknet. Der Träger wird dabei bevorzugt in trockener Form bereitgestellt und das Volumen der wässrigen Lösung des Chlorogoldsäure-Precursors entspricht insbesondere maximal dem Poren-Volumen des Trägers. Die wässrige Lösung des Chlorogoldsäure-Precursors wird beispielsweise schrittweise und nur in dem Volumen zu dem trockenen Träger gegeben wird, bis der Träger kein weiteres Volumen der Lösung mehr aufnehmen kann. Dabei kann die wässrige Lösung des Chlorogoldsäure-Precursors eine Lösung von HAuCl₄ in wässriger Salzsäure mit einer Konzentration von 0,1 mol/l bis 12 mol/l, bevorzugt von 1 mol/l bis 4 mol/l, gegebenenfalls in Verbindung mit mindestens einer weiteren Säure, sein. In einem weiteren Schritt kann eine Reduktion der Katalysatorvorläufer, insbesondere im Wasserstoffstrom, bei Temperaturen von größer oder gleich 250 °C, oder als Flüssigphasenreduktion, durchgeführt werden. Die Reduktion kann dabei für von 10 min bis 300 min, bevorzugt von 80 min bis 120 min erfolgen. Der Wasserstoffstrom kann einen Wasserstoffgehalt von 5 Vol.-% bis 15 Vol.-%, bevorzugt von 10 Vol.-%, und gegebenenfalls Inertgas enthalten. Zu dem Träger und/oder der wässrigen Lösung des Chlorogoldsäure-Precursors können auch zusätzlich Dotierungszusätze, ausgewählt aus Oxiden der Alkalimetalle, Erdalkalimetalle und Seltenerdmetalle, bevorzugt in einem Anteil von 0,01 Gew.-% bis 1 Gew.-%, gegeben werden.

Die Erfindung löst das ihr zugrunde liegende technische Problem auch durch die Verwendung des erfindungsgemäßen Agens als Solubilisierungsmittel. Bevorzugt erfolgt die Verwendung in einem polaren protischen Lösungsmittel, bevorzugt aber in wässriger Lösung. Eine bevorzugte Variante ist die Verwendung eines erfindungsgemäßen Solubilisierungsmittels zur Sequestrierung solcher Metallionen. Eine bevorzugte Variante ist die Verwendung des erfindungsgemäßen Solubilisierungsmittels zur Komplexierung solcher Metallverbindungen. Gegenstand der Erfindung ist die Verwendung des Solubilisierungsmittels für solche Metallverbindungen, wobei das Mittel das Oxidationsprodukt, welches herstellbar ist oder hergestellt wird aus der C1-selektiven Oxidation eines Stärkehydrolysats, dieses enthält oder daraus besteht.

Erfindungsgemäß bevorzugt weist das erfindungsgemäße Agens nicht weniger als 5 Gew.-% und vorzugsweise mehr als 50 Gew.-%, besonders bevorzugt mehr als 75 Gew.-%, insbesondere mehr als 85 Gew.-% oligomere Verbindungen mit einem Polymerisationsgrad von DP2 bis DP3, bevorzugt mit DP2, auf. Erfindungsgemäß bevorzugt weist das Oxidationsprodukt 5 bis 90 Gew.-% alternativ bevorzugt von 10 bis 85 Gew.-% Verbindungen mit DP2 bis DP3, bevorzugt mit DP2 auf.

In einer alternativen Ausführungsform der Erfindung wird das solubilisierende Agens nicht unmittelbar aus einem technischen Stärkehydrolysat, gewonnen, enthält aber ebenfalls über 90 Gew.-% C1-selektiv oxidiertes Kohlenhydrat, insbesondere C1-selektiv oxidierte Aldose, oder besteht daraus.

Erfindungsgemäß bevorzugt wird das Solubilisierungsmittel zum Solubilisieren von Metallverbindungen von insbesondere zwei- oder dreiwertigen Metallkationen eingesetzt. Es soll die Solubilisierung von Metallionen und Metallverbindungen von Metallen der 2. oder 3. Hauptgruppe sowie der 1., 2., 3., 4., 5., 6., 7. und 8. Nebengruppe des Periodensystems der Elemente erreicht werden, insbesondere solcher Metalle daraus, die schwerlösliche Metallverbindungen bilden. Die Metalle sind besonders ausgewählt aus der Gruppe, bestehend aus Kalzium, Magnesium, Mangan, Kupfer, Eisen, Zink, Nickel, Chrom und Aluminium.

Im Zusammenhang mit der Erfindung wird unter "schwerlöslich" eine Eigenschaft einer Metallverbindung verstanden, in einem Lösungsmittel; insbesondere in einem polaren, insbesondere protischen, Lösungsmittel, insbesondere Wasser (H₂O) nur in geringem Maße gelöst wird. Unter Lösung" wird dabei eine einphasige homogene Verbindung oder homogenes Gemisch aus Lösungsmittel und gelöstem Molekül verstanden. Erfindungsgemäß schwerlösliche Metallverbindungen weisen eine Löslichkeit von 1 g pro 1 L Lösungsmittel oder weniger (100 mg/L oder weniger), und besonders von 1 mg/L oder weniger auf. Es versteht sich, dass die Löslichkeit von Faktoren wie Temperatur, pH-Wert, Druck und der Gegenwart weiterer Ionen in der Lösung abhängig ist und dadurch beeinflusst werden kann.

Die Erfindung betrifft vor allem die Verwendung bei schwerlöslichen Metallverbindungen, ausgewählt aus: Carbonaten, Phosphaten, Sulfaten, Sulfiden, Hydroxiden, Oxiden, Halogensalzen (vor allem Chloride und Bromide) sowie Verbindungen organischer Säuren, Carbonsäuren und Alkoholen wie Oxalate, Seifen (Kalkseifen) und Ethanolate sowie Verbindungen organischer Polymere wie Pektat.

Besonders bevorzugt wird das Solubilisierungsmittel zum Solubilisieren von Kalziumverbindungen wie Kalziumcarbonat, Kalziumhydroxid und Kalziumphosphat verwendet. Erfindungsgemäß bevorzugt wird das Solubilisierungsmittel zum Solubilisieren von Magnesiumverbindungen wie Magnesiumcarbonat, Mägnesiumhydroxid und Magnesiumsulfat verwendet. Erfindungsgemäß bevorzugt wird das Solubilisierungsmittel zum Solubilisieren von Manganverbindungen wie Braunstein/Manganoxid und Manganhydroxid verwendet. Erfindungsgemäß bevorzugt wird das Solubilisierungsmittel zum Solubilisieren von Kupferverbindungen wie Kupferhydroxid und Kupfercarbonat verwendet. Erfindungsgemäß bevorzugt wird das Solubilisierungsmittel zum Solubilisieren von Eisenverbindungen wie Eisenhydroxid, Eisencarbonat verwendet. Erfindungsgemäß bevorzugt wird das Solubilisierungsmittel zum Solubilisieren von Aluminiumverbindungen wie Aluminiumhydroxid verwendet.

Bevorzugt dient das erfindungsgemäße Agens oder Solubilisierungsmittel dazu, dass das Ausfallen der Metallionen als schwerlösliche Verbindungen verhindert wird. In einer anderen bevorzugten Variante dient das erfindungsgemäße Agens oder Mittel zur Verhinderung oder zum Auflösen von Niederschlägen oder Belägen aus solchen schwerlöslichen Metallverbindungen.

Bevorzugt liegt das solubilisierende Agens selbst bevorzugt vollständig oder zumindest alternativ als Salz, bevorzugt als Alkalisalz, bevorzugt als Natrium-Salz, vor.

Gegenstand der Erfindung ist auch ein Solubilisierungsmittel für Metallionen, bevorzugt zwei- und/oder dreiwertige Metallkationen, welches als bevorzugt einziges, solubilisierendes Agens das erfindungsgemäße Oxidationsprodukt enthält. Besonders bevorzugt ist die Verwendung eines Alkalimetallsalzes des erfindungsgemäßen Oxidationsprodukts als solubilisierendes Agens zum Binden von Metällverbindungen von Metallionen der 2. Hauptgruppe, besonders Kalziumionen und/oder Magnesiumionen, bei einem hohen pH-Wert, von 11 oder mehr, besonders bei einem pH Wert von 12 oder mehr, ganz besonders bevorzugt bei einem pH Wert von 13 oder mehr, beziehungsweise zum Binden von Metallverbindungen von Nebengruppenmetallen, besonders Eisen und anderen Metallen der 8. Nebengruppe sowie auch Metallen der 1. bis 7. Nebengruppen, bei einem pH-Wert von 8 oder mehr, insbesondere bei einem pH-Wert von 8 bis 9.

Die Erfindung löst das zugrunde liegende technische Problem auch durch die Bereitstellung eines Verfahrens zum Solubilisieren von Metallionen und schwerlöslichen Metallverbindungen, insbesondere solchen, die in wässrigen Lösungen schwerlösliche Niederschläge oder Beläge bilden, enthaltend zumindest den Schritt: Inkontaktbringen des erfindungsgemäßen Agens oder Solubilisierungsmittels unter Bedingungen, die die Bildung einer leicht löslichen Einheit, beispielsweise eines Komplexes, aus mindestens einem Metallion und mindestens einem Molekül des solubilisierenden Agens ermöglichen. Erfindungsgemäß bevorzugt besteht die leicht lösliche Einheit aus einem oder mehreren Metallionen und einem Molekül des solubilisierenden Agens. Erfindungsgemäß bevorzugt besteht die niederschlagshemmende Einheit aus mindestens zwei, bevorzugt mindestens drei, Metallionen und einem Molekül des solubilisierenden Agens.

Erfindungemäß bevorzugt wird das Verfahren in einer Lösung eines polaren protischen Lösungsmittels, besonders aber in wässriger Lösung durchgeführt. Erfindungsgemäß bevorzugt wird das Verfahren bei einem basischen pH-Wert (gemessen unter Standardbedingungen, 21 °C), durchgeführt. Erfindungsgemäß bevorzugt wird das Verfahren bei einem pH-Wert von 8 oder mehr in einer anderen Variante von 11 oder mehr, besonders bevorzugt bei einem pH-Wert von 12 oder mehr, insbesondere bei einem pH-Wert von 13 oder mehr durchgeführt. Das Optimum der solubilisierenden Wirkung liegt in einer ersten Variante für Metallverbindungen der Nebengruppenmetalle (1. bis 8. Nebengruppe) insbesondere Eisen, bei pH 8 bis 9; in einer anderen Variante liegt das Optimum, insbesondere für Erdalkalimetallionen, insbesondere Kalzium und Magnesium, bei pH 13 bis 14.

Es zeigt sich überraschenderweise, dass ein erfindungsgemäßes Solubilisierungsmittel als Salz oder als Säure, die vom Endverbraucher in einer Zusammensetzung neutralisiert werden kann, sehr gut als Solubilisierungsmittel für Metallverbindungen in basischen Reinigungslösungen, insbesondere basischen industriellen Reinigungslösungen verwendet werden kann. Unter solchen Bedingungen sind die erfindungsgemäßen Solubilisierungsmittel überraschenderweise bessere Alternativen zu herkömmliche Agenzien wie NTA und EDTA.

In einer erfindungsgemäß bevorzugten Verwendung wird das erfindungsgemäße Solubilisierungsmittel in einer flüssigen Mischung mit anderen Inhaltsstoffen wie Natriumhydroxid, Natriumsilikat, Phosphaten und/oder Tensiden verwendet. Ohne an die Theorie gebunden sein zu wollen, stellten sich synergistische Wirkungen aus dem Zusammenwirken der oberflächeaktiven Substanzen, der Alkalien und des erfindungsgemäßen solubilisierenden Agens ein.

Gegenstand der Erfindung ist die Verwendung als biologisch leicht abbaubares Solubilisierungsmittel. Die Erfinder fanden überraschend, dass das erfindungsgemäße Mittel aufgrund seiner chemischen Konstitution besonders leicht in an sich bekannten Abbauwegen und Stoffwechselprozessen, insbesondere durch mikrobiologische Enzymaktivität, zersetzbar und abbaubar ist, wobei vor allem keine schädlichen Verbindungen persistieren. Die Erfindung sieht demgemäß bevorzugt vor, das erfindungsgemäße Agens in Prozessen einzusetzen, in denen eine hohe Umweltverträglichkeit, insbesondere die biologische Abbaubarkeit, gewährleistet sein muss.

Gegenstand der Erfindung ist die Verwendung des Solubilisierungsmittels zum Verhindern des Ausfallens und/oder zum Auflösen von schwerlöslichen Kalziumverbindungen wie Kalk/Kalkspat, Calcit, Dolomit, Kesselstein und Mischcarbonaten und Kalkseifen sowie schwerlöslichen Magnesiumverbindungen. Die Gegenwart von Kalzium und Magnesium in wässrigen Lösungen stellt grundsätzlich ein großes Risiko für die Bildung von Belägen, sogenannten Kalkablagerungen, dar, weil diese Metallionen bekanntermaßen schwerlösliche Verbindungen bilden.

Gegenstand der Erfindung ist auch die Verwendung des Solubilisierungsmittels als Gerüststoff für Detergenzien und Waschmittel, gegebenenfalls in Verbindung mit oberflächenaktiven Substanzen, Alkalien, Silikaten, Aluminosilikaten und/oder Phosphaten.

Es nützt auch der Verbesserung der Benetzung von Oberflächen.

Es nützt auch der Beseitigung von Belägen von Mikroorganismen, gegebenenfalls in Verbindung mit Sulfaminsäure.

Es nützt auch der Reinigung von Oberflächen von Gießformen, gegebenenfalls in Verbindung mit Alkalien wie Natriumcarbonat und dessen Hydraten, beispielsweise der Reinigung von Gießformen zur Glasherstellung.

Gießformen bei der Glasherstellung benötigen eine regelmäßige Reinigung um die Ablagerungen von Rost, Silikaten und Kohlenstoffen zu verhindern. Es kann das Solubilisierungsmittel hierzu in einem Waschmittel mit einer Konzentration von 50 bis 100 Gramm pro Liter verwendet werden. Es kann eine solche Waschlösung zusätzlich etwa 200 Gramm Soda enthalten.

Das Solubilisierungsmittel nützt auch der Beseitigung von Betonablagerungen und -verunreinigungen.

Es nützt auch der Beseitigung oder Verhinderung von Ablagerungen und Belägen in Industrieanlagen oder Maschinen.

Es nützt auch der Beseitigung von Rostablagerungen und - verunreinigungen.

Es nützt auch der Beseitigung von Farbablagerungen und - verunreinigungen.

Es nützt auch der Beseitigung von Kalziumsulfatablagerungen.

Es nützt auch der Entfettung von Metalloberflächen.

Es nützt auch der Entfettung, gegebenenfalls in Verbindung mit Alkalien wie Carbonaten und Hydroxiden.

Bei der Entfettung von Metalloberflächen soll eine Wiederanlagerung von schwerlöslichen Salzen auf der Metalloberfläche verhindert werden. Dies kann durch die Beigabe des erfindungsgemäßen Solubilisierungsmittels zu der Entfettungslösung erreicht werden. Es nützt auch der Beseitigung oder Verhinderung von Ablagerungen und Belägen in galvanischen Bädern.

Gegenstand der Erfindung ist insbesondere die Verwendung des Solubilisierungsmittels als Bestandteil von Geschirrreiniger-Zusammen-setzungen. Gegenstand der Erfindung ist auch die Verwendung des Solubilisierungsmittels bei der Geschirrreinigung. Erfindungsgemäß bevorzugt ist die Verwendung des Solubilisierungsmittels bei der industriellen Geschirrreinigung. Das Solubilisierungsmittel kann in einer der Geschirrreinigerzusammensetzung, die in fester, insbesondere in pulverförmiger Form, oder in flüssiger Form vorliegen kann, verwendet werden. In der industriellen Geschirreinigung werden dabei bevorzugt alkalischere Lösungen verwendet als solche, die im Haushalt verwendet werden.

Damit im Zusammenhang steht auch die Verwendung des Solubilisierungsmittels zur Reinigung von harten Oberflächen. Die Reinigung von harten Oberflächen wie beispielsweise Böden oder Arbeitsplatten erfordert flüssige Waschlösungen, in denen die Wirkmittel in konzentrierter Form vorliegen. Die Waschlösungen müssen die Entfernung von Spuren von mineralischen und organischen Materialien ermöglichen. Dabei erwies sich die Verwendung des erfindungsgemäßen Solubilisierungsmittels als vorteilhaft, insbesondere in flüssigen Formulierungen, in denen das Solubilisierungsmittel aufgrund der geringen Kristallisationsneigung in einer höheren Konzentration eingesetzt werden kann.

Gegenstand der Erfindung ist auch die Verwendung des Solubilisierungsmittels bei der Glasflaschenreinigung.

Die Verwendung des erfindungsgemäßen Solubilisierungsmittels bei der Glasflaschenreinigung ist vorteilhaft, da das Solubilisierungsmittel leicht bioabbaubar ist. Darüberhinaus ist ein erfindungsgemäßes Solubilisierungsmittel bei der Verwendung in alkalischen Medien sehr effizient und gegenüber einer Hydrolyse resistent. Die Verwendung des erfindungsgemäßen Solubilisierungsmittels verhindert die Bildung von Ablagerungen und Trübungen und führt zu einer effektiven Reinigung der Flaschenhälse. Darüberhinaus wird die Bildung von Kalkablagerungen und Kesselstein in den Wascheinrichtungen, Waschmaschinen und Reinigungsmittelbehältern verhindert. Bei der Reinigung von Glasflaschen mit Aluminiumverschlüssen wird darüber hinaus die Bildung von Aluminiumhydroxid-Ablagerungen in den Reinigungssystemen verhindert. Auch kann eine Einsparung von Kosten und Ressourcen, insbesondere Wasser, erreicht werden, da durch die geringe Toxizität des erfindungsgemäßen Solibilisierungsmittels die Spülprozesse vereinfacht und verkürzt werden können. Überraschenderweise wurde auch eine verbesserte Entfernung von Tinte beobachtet.

Damit im Zusammenhang steht auch die Verwendung des Solubilisierungsmittels bei der Reinigung von Maschinen und Geräten in der Lebensmittelindustrie.

Damit im Zusammenhang steht auch die Verwendung des Solubilisierungsmittels zur Reinigung von Filtern, insbesondere Ultrafiltrations-Membranen, beispielsweise in der Milchindustrie.

Die Ultrafiltration ist eine Separierungstechnik, die in der Milchindustrie sehr verbreitet ist, um Makromoleküle der Milch und Lactoserum zu trennen und zu konzentrieren. Die dabei verwendeten Membranen brauchen eine regelmäßige Reinigung um eine genügende Selektivität und Permeabilität zu garantieren und mikrobiologische Kontamination zu verhindern.

Es nützt auch der Reinigung von Filtern das Solubilisierungsmittel in einer Lösung verwendet, die weitere Sequestierungsmittel wie EDTA enthält. Der EDTA-Gehalt einer Waschlösung kann jedoch durch die Verwendung des erfindungsgemäßen Solubilisierungsmittels deutlich reduziert werden.

Es nützt auch der Verhinderung von Ablagerungen bei der Bierherstellung. In der Brauereiindustrie kann eine ungenügende Reinigung zum Wachsen von Mikroorganismen auf Kalziumablagerung führen. Dadurch kann es zu einer ungewollten Veränderung, insbesondere Verschlechterung des Geschmacks und des Geruchs des Bieres kommen. Dies kann durch die Reinigung mit einem erfindungsgemäßen Solubilisierungsmittel, insbesondere in Kombination mit Sulfaminsäure verhindert werden, da eine Bildung von Kalziumablagerungen verhindert wird.

Es nützt auch der Reinigung von Maschinen zur Papierherstellung.

Es nützt auch der Herstellung von Polycarbonaten.

Es nützt auch der Herstellung von Farben.

Es nützt auch als Zusatzmittel beim Schleifen oder Mahlen.

Es nützt auch dem Solubilisieren von Spurenelementen in Lebensmitteln. Erfindungsgemäß bevorzugt ist die Solubilisierung der Spurenelemente Barium, Mangan, Kupfer und/oder Molybdän.

Es nützt auch derStabilisierung von Natriumaluminat, beispielsweise bei der Titandioxidherstellung.

Es nützt auch dem Verhindern des Ausfallens von Aluminiumhydroxid und ähnlichen Verbindungen, beispielsweise bei Ätzvorgängen von Aluminium.

Es nützt auch bei der Herstellung von Fäden und Garnen.

Gegenstand der Erfindung ist insbesondere die Verwendung des Solubilisierungsmittels als Bestandteil von Waschmittel-Zusammensetzungen für Textilien.

Gegenstand der Erfindung ist insbesondere auch die Verwendung des Solubilisierungsmittels als Bestandteil von Bleichmittel-Zusammensetzungen für Textilien.

Gegenstand der Erfindung ist insbesondere auch die Verwendung des Solubilisierungsmittels als Bestandteil von Färbemittel-Zusammensetzungen für Textilien.

Es nützt aber auch der Verzögerung des Abbindens von Beton. Gegenstand der Erfindung ist auch die Verwendung des in einem der vorstehenden Ansprüche charakterisierten Solubilisierungsmittels zur Verzögerung des Abbindens von Zement oder Mörtel, insbesondere in Zement, der bei Bohrungen, beispielsweise Ölbohrungen verwendet wird.

Gegenstand der Erfindung ist vor allem die Verwendung des Solubilisierungsmittels in einer Wasch- oder Reinigungslösung. Gegenstand der Erfindung ist auch eine Wasch- oder Reinigungslösung, welche das erfindungsgemäße Agens als bevorzugt einziges Solubilisierungsmittel enthält.

Es nützt aber auch als Bestandteil von Entwicklerbädern für Photographien und Filme.

Ein Fachmann wird ohne Probleme den Mengenanteil des erfindungsgemäßen Solubilisierungsmittels bei der Verwendung in einer Waschlösung in an sich bekannter Weise bestimmen können. Bevorzugt wird das Solubilisierungsmittel in einer Waschlösung in einem Mengenanteil von 2 Gew.-% bis 100 Gew.-% verwendet. Je nach Verwendung kann das Solubilisierungsmittel in einer Waschlösung beispielsweise zu 5 Gew.-%, zu 7 Gew.-%, zu 10 bis 20 Gew.-%, insbesondere zu 13 Gew.-%, oder zu 25 Gew.-% vorliegen.

Es erwies sich die Verwendung des erfindungsgemäßen Solubilisierungsmittels insbesondere in flüssigen Formulierungen, in denen das Solubilisierungsmittel aufgrund der geringen Kristallisationsneigung in einer höheren Konzentration eingesetzt werden kann, als vorteilhaft.

Die Erfindung sieht in den vorgenannten erfindungsgemäßen Verwendungen bevorzugt vor, dass das Solubilisierungsmittel in alkalischen (wässrigen) Lösungen ab einem pH-Wert von 8 oder mehr verwendet wird; bevorzugt wird das Solubilisierungsmittel in alkalischen wässrigen Lösungen ab einem pH-Wert von 11 oder mehr verwendet, bevorzugt wird das Solubilisierungsmittel ab einem pH-Wert von 12 oder mehr, bevorzugt von 13 oder mehr verwendet; besonders bevorzugt wird das Solubilisierungsmittel in stark alkalischen (wässrigen) Lösungen ab einem pH-Wert von 13,5 oder von 14 oder mehr verwendet. Bevorzugt wird das erfindungsgemäße Agens in Form eines Sirups oder allgemein in flüssiger Form verwendet.

Die Erfindung wird anhand der Figuren und der Beispiele näher charakterisiert, ohne dass diese beschränkend zu verstehen wären.

### Beschreibung der Figuren

Figur 1 zeigt die Kalziumcarbonatdispergierungskapazität eines erfindungsgemäßen Solubilisierungsmittels im Vergleich zu EDTA, NTA und Gluconat in stark basischen wässrigen Lösungen.
Figur 2 zeigt die Kalziumcarbonatdispergierungskapazität vier verschiedener erfindungsgemäßer Solubilisierungsmittel im Vergleich zu EDTA und Gluconat in stark basischen wässrigen Lösungen.

### Beispiele

### Beispiel 1: Herstellung eines erfindungsgemäßen solubilisierenden Agens (Sol. D)

Eine Lösung eines kommerziell erhältlichen technischen Stärkehydrolysats wurde im Rührkessel an einem Al₂O₃-geträgerten Gold-katalysator oxidiert. Die Reaktionsbedingungen waren: T = 40-80 °C, pH = 7-11, p = 1-25 bar O₂. Der pH-Wert der Reaktionssuspension wurde durch Titration mit Natronlauge konstant gehalten. Die Reaktion wurde bis zu einem vollständige Umsatz durchgeführt. Am Ende der Reaktion wurde der Katalysator durch Filtration abgetrennt. Der erhaltene öxidierte Sirup konnte ohne weitere Aufreinigung durch geeignete einfache Verfahren (Wasserentzug) aufkonzentriert (65 bis 75 % TS) und als lagerfähiges Solubilisierungsagens eingesetzt werden.

### Beispiel2: Vergleichsmessung der Kalziumcarbonatdispergierungiskapazität eines erfindungsgemäßen Solubilisierungsmittels

Die Kalziumcarbonatdispergierungskapazität ("calcium carbonat dispersing capacity", CCDC) eines erfindungsgemäßen Solubilisierungsmittels wurde mit der CCDC von Solubilisierungsmitteln aus dem Stand der Technik verglichen. Als erfindungsgemäßes Solubilisierungsmittel wurde ein selektiv C1-oxidiertes Produkt aus der Oxidation eine Stärkehydrolysats mit einem Dextroseäquivalent (DE) von 55 bis 60 und mit 90 Gew.-% DP2-Verbindungen (Sol. A) verwendet.

Das Dextroseäquivalent (DE) wurde in an sich bekannter Weise durch Bestimmung der reduzierenden Anteile der Zusammensetzung, besonders nach Fehling, bestimmt.

Die CCDC wurde mit der von EDTA, NTA und Na-Gluconat verglichen. Die CCDC wurde nach F. Richter und E.W. Winkler ("Das Calciumbindevermögen", Tenside Surfactants Detergents 24 (1987), S. 213 -216) bestimmt. Es wurde die CCDC bei NaOH-Konzentrationen von 0,5 %, 1 %, 1,5 %, 2 %, 2,5 % und 3 % gemessen.

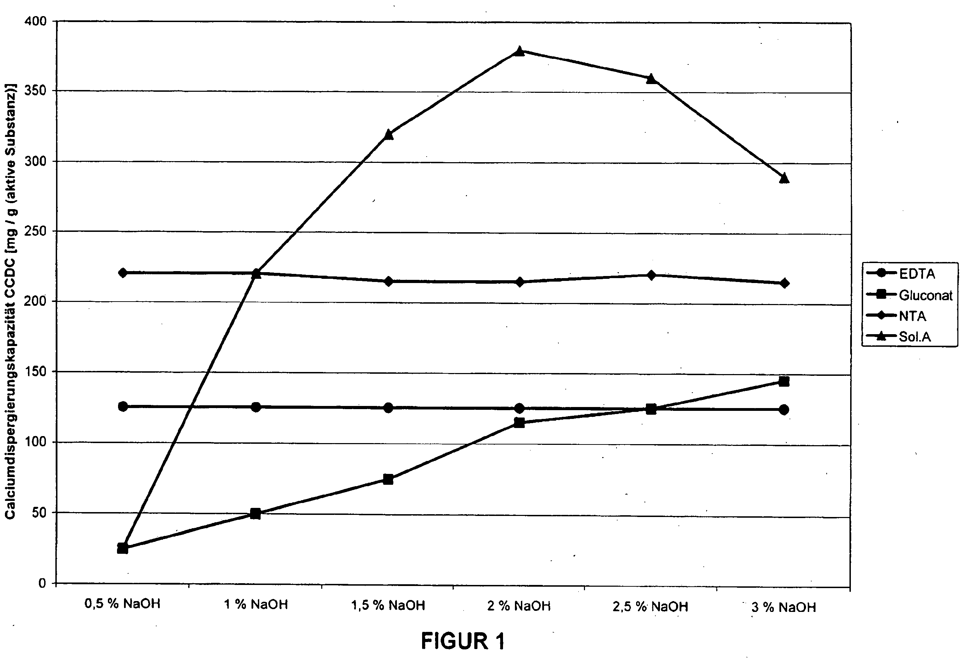

Die Messergebnisse sind in Figur 1 veranschaulicht. Gluconat und das erfindungsgemäße Solubilisierungsmittel zeigen eine deutliche pH-Abhängigkeit ihrer CCDC, jedoch ist die die Wirkung des erfindungsgemäßen Solubilisierungsmittels stärker als bei Gluconat und in sehr basischen Lösungen auch stärker als bei EDTA und NTA.

### Beispiel 3: Vergleichsmessung der Kalziumcarbonatdispergierungskapazität unterschiedlicher erfindungsgemäßer Solubilisierungsmittel

Es wurden neben dem erfindungsgemäßen Solubilisierungsmittel aus Beispiel 2 (im Folgenden Sol. A genannt), drei weitere Solubilisierungsmittel (Sol. B, Sol. C und Sol. D) hergestellt. Dazu wurden Stärkehydrolysate mit unterschiedlichen DE und Gehalt an DP2 und DP3 nach Beispiel 1 oxidiert.

Sol. B wurde aus einem Stärkehydrolysat mit einem DP2-Anteil von 5 % und einem Dextroseäquivalent (DE) von etwa 95 hergestellt. Sol. C wurde aus einem Stärkehydrolysat mit einem DP2-Gehalt von 40 bis 46 % und einem DE von 40 bis 45 hergestellt. Sol. D wurde aus einem Stärkehydrolysat mit einem DP2-Gehalt von 70 bis 80 % und einem DE von etwa 50 bis 55 hergestellt.

Die CCDC von Sol. A, Sol. B, Sol. C und Sol. D wurde mit der CCDC von Gluconat und EDTA verglichen. Die CCDC wurde wie in Beispiel 2 bestimmt. Es wurde die CCDC bei NaOH-Konzentrationen von 1 %, 2 %, und 3 % gemessen.

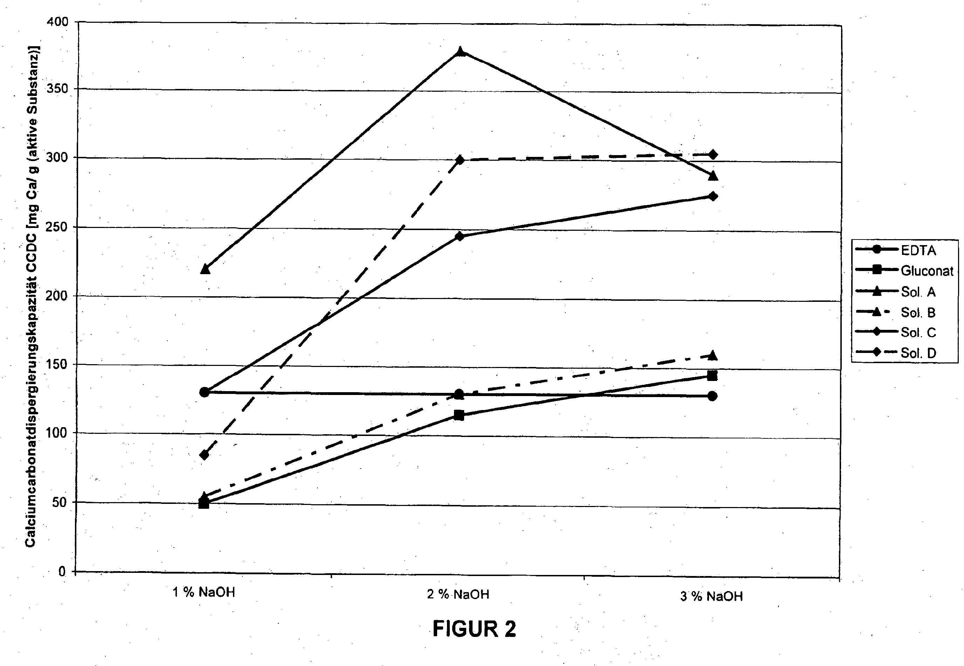

Die Messergebnisse sind in Figur 2 dargestellt: Die erfindungsgemäßen Solubilisierungsmittel zeigen eine mindestens gleich gute CCDC wie Gluconat. Sol. A, Sol. C und Sol. D zeigen sogar eine deutliche bessere CCDC als Gluconat über alle drei Messpunkte hinweg.

### Beispiel 4: Waschlösung zum Reinigen von Flaschen

Eine Waschlösung zum industriellen Reinigen von Flaschen kann beispielsweise folgende Zusammensetzung haben:

| | |
|---|---|
| - Natriumhydroxid: | 40 bis 70 Gew.-% |
| - erfindungsgemäßes Solubilisierungsmittel: | 10 bis 20 Gew.-% |
| - nicht-ionisches Tensid: | 1 bis 10 Gew.-% |
| - Natriummetasilikat: | 10 bis 25 Gew.-% |
| - Trisodiumphosphat oder Polyphosphate: | 5 bis 10 Gew.-% |

### Beispiel 5: Waschlösung für die industrielle Reinigung von Geschirr

a) Ein pulverförmiges Waschmittel zum industriellen Reinigen von Geschirr kann beispielsweise folgende Zusammensetzung haben:

| | |
|---|---|
| - Tenside: | 3 Gew.-% |
| - Phosphate: | 50 Gew.-% |
| - Natriummetasilikat, 5H₂O: | 25 Gew.-% |
| - Natriumhydroxid: | 15 Gew.-% |
| - erfindungsgemäßes Solubilisierungsmittel: | 5 Gew.-% |
| - Natriumdichloroisocyanurat: | 2 Gew.-% |

b) Ein flüssiges Lösungsmittel zur industriellen Reinigung von Geschirr kann beispielsweise folgende Zusammensetzung haben.

| | |
|---|---|
| - Wasser: | 59 Gew.-% |
| - erfindungsgemäßes Solubilisierungsmittel: | 13 Gew.-% |
| - Kaliumhydroxid: | 21 Gew.-% |
| - Natriummetasilikat, 5H₂O: | 4 Gew.-% |
| - Natriumcarbonat: | 2 Gew.-% |
| - Natriumhypochlorid: | 1 Gew.-% |

### Beispiel 6: Zusammensetzung zur Reinigung von Ultrafiltrationsmembranen

Zur Reinigung von Ultrafiltrationsmembranen kann beispielsweise folgende Zusammensetzung verwendet werden:

| | |
|---|---|
| - Natriumhydroxid: | 49 Gew.-% |
| - Erfindungsgemäßes Solubilisierungsmittel: | 25 Gew.-% |
| - Dinatriumsalz von EDTA: | 24 Gew.-% |
| - anionisches Tensid: | 1 Gew.-% |

Diese Zusammensetzung kann in einer Waschlösung in einer Konzentration von beispielsweise 10 Gramm pro Liter verwendet werden.

### Beispiel 7: Zusammensetzung zum chemischen Entfetten von Metalloberflächen

Je nach zu reinigendem Metall können unterschiedliche Zusammensetzungen verwendet werden.

Die Entfettungslösung kann beispielsweise bei Temperaturen von 60 °C bei Zinklegierungen oder 75°C bei Stahl und Kupferlegierungen verwendet werden.

Die Angaben sind als Gramm Substanz pro Liter Entfettungslösung zu verstehen. Als Lösungsmittel wird Wasser verwendet:

| | Stahl: | Kupferlegierung: | Zinklegierung: |
|---|---|---|---|
| Natriumhydroxid: | 40 | 15 | 8 |
| Natriumcarbonat: | 15 | 5 | 8 |
| Natriumorthophosphat: | 15 | 5 | 10 |
| Borax: | - | - | 5 |
| erfindungsgemäßes Solubilisierungsmittel: | 20 | 25 | 20 |
| anionisches Tensid : | 0,3 | 0,3 | 0,3 |

## Patentansprüche

1. Solubilisierungsmittel für schwerlösliche Metallverbindungen, enthaltend als solubilisierendes Agens ein Oxidationsprodukt, herstellbar durch C1-selektive Oxidation eines Stärkehydrolysats, wobei das Stärkehydrolysat einen Anteil von mindestens 50 Gew.-% Verbindungen mit DP2 bis DP4 aufweist.

2. Solubilisierungsmittel nach einem der vorstehenden Ansprüche, wobei das Stärkehydrolysat einen Anteil von mindestens 75 Gew.-% Verbindungen mit DP2 bis DP4 aufweist.

3. Solubilisierungsmittel nach einem der vorstehenden Ansprüche, wobei das Stärkehydrolysat ein Dextrose-Äquivalent im Bereich von DE 50 bis DE 55 aufweist.

4. Solubilisierungsmittel nach einem der vorstehenden Ansprüche, das mehr als 90 Gew.-% monocarboxylierte Verbindungen aufweist.

5. Solubilisierungsmittel nach einem der vorstehenden Ansprüche, wobei das Solubilisierungsmittel zum Solubilisieren von schwerlöslichen Metallverbindungen zwei- oder dreiwertiger Metallkationen, ausgewählt aus der Gruppe, bestehend aus Magnesium, Mangan, Kalzium, Kupfer, Eisen, Zink, Nickel, Chrom und Aluminium, verwendet wird.

6. Verfahren zum Solubilisieren von Metallionen, enthaltend den Schritt: Inkontaktbringen des in einem der vorstehenden Ansprüche charakterisierten Solubilisierungsmittels unter Bedingungen, die die Bildung eines Komplexes aus mindestens einem Metallion und mindestens einem Molekül des Solubilisierungsmittels ermöglichen.

7. Verwendung des in einem der vorstehenden Ansprüche charakterisierten Solubilisierungsmittels zur Komplexierung von Metallionen.

8. Verwendung des in einem der vorstehenden Ansprüche charakterisierten Solubilisierungsmittels als Gerüststoff für Detergenzien und Waschmittel, gegebenenfalls in Verbindung mit oberflächenaktiven Substanzen, Alkalien, Silikaten, Aluminosilikaten und/oder Phosphaten.

9. Verwendung des in einem der vorstehenden Ansprüche charakterisierten Solubilisierungsmittels bei der Geschirrreinigung, insbesondere bei der industriellen Geschirrreinigung.

10. Verwendung des in einem der vorstehenden Ansprüche charakterisierten Solubilisierungsmittels als Bestandteil von Geschirrreiniger-Zusammensetzungen.

11. Verwendung des in einem der vorstehenden Ansprüche charakterisierten Solubilisierungsmittels bei der Glasflaschenreinigung.

12. Verwendung des in einem der vorstehenden Ansprüche charakterisierten Solubilisierungsmittels als Bestandteil von Waschmittel-Zusammensetzungen für Textilien.

13. Verwendung des in einem der vorstehenden Ansprüche charakterisierten Solubilisierungsmittels als Bestandteil von Bleichmittel-Zusammensetzungen für Textilien.

14. Verwendung nach einem der Ansprüche 8 bis 13 in gering alkalischen wässrigen Lösungen ab pH 8 oder mehr.

15. Verfahren zur Herstellung eines Solubilisierungsmittels für schwerlösliche Metallverbindungen, enthaltend die Schritte:
- Bereitstellen eines Stärkehydrolysats oder eine Stärkehydrolysatzusammensetzung mit einem Anteil von 50 Gew.-% oder mehr Verbindungen mit DP2 und DP4
- Katalytische Oxidation des Stärkehydrolysats oder der Stärkehydrolysat-Zusammensetzung, so dass ausschließlich das C1-ständige C-Atom des mindestens einen Kohlenhydrats des Stärkehydrolysats oxidiert wird.

## Claims

1. Solubilizing agent for hardly soluble metal compounds comprising, as solubilizing agent, an oxidation product producible by C1 selective oxidation of a starch hydrolysate, wherein the starch hydrolysate comprises an amount of at least 50 wt% compounds with DP2 to DP4.

2. Solubilizing agent according to one of the preceding claims, wherein the starch hydrolysate comprises an amount of at least 75 wt% compounds with DP2 to DP4.

3. Solubilizing agent according to any one of the preceding claims, wherein the starch hydrolysate has a dextrose equivalent in the range of from DE 50 to DE 55.

4. Solubilizing agent according to one of the preceding claims, which comprises more than 90 wt% monocarboxylated compounds.

5. Solubilizing agent according to one of the preceding claims, wherein the solubilizing agent is used for solubilisation of hardly soluble metal compounds of di- or trivalent metal cations, selected from the group consisting of magnesium, manganese, calcium, copper, iron, zinc, nickel, chromium, and aluminium.

6. Method for solubilisation of metal ions containing the step: bringing into contact the solubilizing agent **characterized in** one of the preceding claims under conditions that enable the formation of a complex of at least one metal ion and at least one molecule of the solubilizing agent.

7. Use of the solubilizing agent **characterized in** one of the preceding claims for complexing metal ions.

8. Use of the solubilizing agent **characterized in** one of the preceding claims as builder for detergents and washing agents, optionally in combination with surface-active substances, alkali, silicates, aluminosilicates and/or phosphates.

9. Use of the solubilizing agent **characterized in** one of the preceding claims for the cleaning of dishware, especially for the industrial cleaning of dishware.

10. Use of the solubilizing agent **characterized in** one of the preceding claims as component of dishwashing compositions.

11. Use of the solubilizing agent **characterized in** one of the preceding claims for the cleaning of glass bottles.

12. Use of the solubilizing agent **characterized in** one of the preceding claims as component of washing agent compositions for textiles.

13. Use of the solubilizing agent **characterized in** one of the preceding claims as component of bleach compositions for textiles.

14. Use according to any one of claims 8 to 13 in slightly alkaline aqueous solutions starting with pH 8 or higher.

15. Method for the production of a solubilizing agent for hardly soluble metal compounds, containing the steps:
- preparing a starch hydrolysate or starch hydrolysate composition comprising an amount of 50 wt% or more compounds with DP2 and DP4
- catalytic oxidation of the starch hydrolysate or starch hydrolysate composition such that exclusively the C1-position C-atom of the at least one carbohydrate of the starch hydrolysate is oxidized.

## Revendications

1. Agent de solubilisation pour composés métalliques difficilement solubles, contenant, en tant qu'agent solubilisant, un produit d'oxydation obtenable par oxydation sélective C1 d'un hydrolysat d'amidon, l'hydrolysat d'amidon présentant une proportion d'au moins 50 % en poids des composés avec DP2 à DP4.

2. Agent de solubilisation selon l'une quelconque des revendications précédentes, l'hydrolysat d'amidon présentant une proportion d'au moins 75 % en poids des composés avec DP2 à DP4.

3. Agent de solubilisation selon l'une quelconque des revendications précédentes, l'hydrolysat d'amidon présentant un équivalent dextrose dans la rangée de DE 50 à DE 55.

4. Agent de solubilisation selon l'une quelconque des revendications précédentes, présentant plus de 90 % en poids des composés monocarboxylés.

5. Agent de solubilisation selon l'une quelconque des revendications précédentes, l'agent de solubilisation étant utilisé pour solubiliser des composés métalliques difficilement solubles de cations métalliques divalents ou trivalents, sélectionnés dans le groupe consistant en magnésium, manganèse, calcium, cuivre, fer, zinc, nickel, chrome et aluminium.

6. Procédé pour solubiliser des ions métalliques, comprenant l'étape suivante :
contacter l'agent de solubilisation caractérisé selon l'une quelconque des revendications précédentes sous conditions qui permettent la formation d'un complexe d'au moins un ion métallique et au moins une molécule de l'agent de solubilisation.

7. Utilisation de l'agent de solubilisation caractérisé selon l'une quelconque des revendications précédentes pour la complexation des ions métalliques.

8. Utilisation de l'agent de solubilisation caractérisé selon l'une quelconque des revendications précédentes en tant qu'adoucisseur pour détergents et lessives, le cas échéant dans liaison avec des surfactants, alcalis, silicates, aluminosilicates, et/ou phosphates.

9. Utilisation de l'agent de solubilisation caractérisé selon l'une quelconque des revendications précédentes dans le nettoyage de la vaisselle, notamment dans le nettoyage industriel de la vaisselle.

10. Utilisation de l'agent de solubilisation caractérisé selon l'une quelconque des revendications précédentes en tant que composant des compositions pour le nettoyage de la vaisselle.

11. Utilisation de l'agent de solubilisation caractérisé selon l'une quelconque des revendications précédentes dans le nettoyage de bouteilles de verre.

12. Utilisation de l'agent de solubilisation caractérisé selon l'une quelconque des revendications précédentes en tant que composant de compositions de lessive pour textiles.

13. Utilisation de l'agent de solubilisation caractérisé selon l'une quelconque des revendications précédentes en tant que composant de compositions d'agent de blanchiment pour textiles.

14. Utilisation selon l'une quelconque des revendications 8 à 13 dans solutions aqueuses faiblement alcalines avec un pH 8 ou supérieur.

15. Procédé pour la fabrication d'un agent de solubilisation pour composés métalliques difficilement solubles, comprenant les étapes suivantes :
- mettre à disposition un hydrolysat d'amidon ou une composition d'hydrolysat d'amidon avec une proportion de 50 % en poids ou plus des composés avec DP2 et DP4
- oxydation catalytique de l'hydrolysat d'amidon ou de la composition d'hydrolysat d'amidon, de telle manière que seulement l'atome de carbone dans la position C1 de l'au moins un glucide de l'hydrolysat d'amidon est oxydé.
